# EUROPEAN PATENT APPLICATION

(11) **EP 2 415 553 A1**
(43) Date of publication of application: **08.02.2012**
(21) Application number: 11176294.4
(22) Date of filing: 02.08.2011
(51) Int. Cl.: B23K 35/38, B23K 26/14

(54) **Use of mixtures containing acetylene or other unsaturated hydrocarbons to improve the performances of fibre laser sources in cladding processes**

(30) Priority: 03.08.2010 IT MI20101481
(71) Applicant: Societa'Italiana Acetilene & Derivati S.I.A.D. S.p.A. in breve S.I.A.D. S.p.A., 24126 Bergamo (IT)
(72) Inventor: Malomo, Alfredo, 24126 Bergamo (IT)
(74) Representative: Minoja, Fabrizio

(57) **Abstract**

The invention discloses a fibre laser source system and a head for cladding processes, characterized in that they use as assistant gas unsaturated hydrocarbons selected from acetylene, methylacetylene, ethyl acetylene, propylacetylene, particularly acetylene, in the gaseous state.

## Description

The object of the present invention are fibre laser source systems and a head for cladding processes, characterised by the use of assistant gas unsaturated hydrocarbons selected from acetylene, methylacetylene, propylacetylene, particularly acetylene, in the gaseous state.

The invention also relates to the use of the said unsaturated hydrocarbons as assistant gas in fibre laser source systems for cladding processes.

### Background of the invention

The processing of metal sheets, tubes and pieces in general, is of major relevance in the manufacturing industry and not only. The main processes performed in the manufacturing industry on these articles are welding, cutting and cladding.

The use of gaseous mixtures containing acetylene or other unsaturated hydrocarbons to ease welding and cutting processes has been widely shown in DE 10 2008057688, DE 10 2008057687, DE 102008057686 and in EP 2 186 593.

The term cladding intends to mean the coating of a piece by means of a set of technologies: laser, design and production software (CAD/CAM), robotics, sensors and checks and powder metallurgy. Cladding makes use of a laser heat source to deposit the desired metal thin layer. The layered material can be transferred to the substrate by different methods: powder injection, pre-positioning the powder on the substrate or with wire feeding. Among all these methods, the laser cladding by powder injection has been shown to be the most effective. In this process, the laser ray melts the powder and thin mobile substrate layer particles in order to deposit a thin layer of powder particles on the substrate. It is possible to employ a wide variety of materials on a substrate by laser with powder injection in order to form layers, whose thicknesses vary from 0.05 to 2 mm and narrow widths of 0.4 mm.

Laser cladding affords several advantages compared to arc welding and plasma spraying methods. Laser cladding produces minimal dilution, minimal distortion and better surface quality coatings. The limit of this technology, hindering its diffusion, is the low available productivity, in relation to a considerable investment, with all the economic related consequences.

There are several laser systems allowing the cladding process.

Hereinafter follows a brief description of the laser systems mostly employed.

The first, CO₂ laser, is being rapidly replaced by fibre laser due to the reasons set out below.

The term Laser is the acronym of Light Amplification by Stimulated Emission Radiation. The laser light is characterized by some unique properties: the laser beam is strong, easily given a precise direction, coherent and monochromatic. A laser device in fact provides a super collimated light beam consisting of photons with well defined energy and very high intensity (the beam intensity is due to the photons' number within the same). A laser system always has two basic elements:
- an energy source (hereinafter the source): system emitting energy useful in exciting atoms in the active material; it can consist of a lamp, diodes, (optic pumping), electric systems (electric pumping), etc.
- an active medium: whose purpose is to provide electrons to be hit by the source energy in order to generate the laser radiation. The active medium state can be gaseous, solid or liquid.

The cladding processes can be optimized through a process of piece pre-treatment and post-treatment. These treatments before or after the piece processing in cladding processes can make use of gas or not. We mention as an example, though not comprehensive, e.g. pre-heating of the surface to be clad through the use of a combustible gas and a combustive gas.

Pre-treatments and post-treatments are known and established technologies therefore not subject matter of the present patent.

**CO₂** l**aser**: in this instance the laser beam is produced by carbon dioxide. The gas subject to an electromagnetic field emits photons originating from excited electrons orbiting around the molecule core. The resonator, or laser machine, inside which the "Laser" phenomenon is produced, usually consists of a glass tube called a "Cavity" inside which the gas is circulated, the gas movement is achieved by a turbine or a booster. The gas is actually a gas mixture, usually He (Helium), N₂ (Nitrogen) and in a minimal part CO₂. It is CO₂ which subjected to a magnetic field produces the laser effect. CO₂ laser systems have been used for about thirty years, and this technology has been constantly improving. These lasers are being used on a wide range of materials: from carbon to stainless steels, to some alloys. CO₂ lasers also work on high thickness materials. The great advantage of these systems comes from this technology reliability and high precision.

A limit, compared to other systems employed, is due to the CO₂ laser generated beams poor absorbance on materials with high reflectivity at far IR wavelengths (10 micron) compared to near IR wavelengths (1 micron) typical of high brilliance lasers.

**High brilliance sources**: in recent years solid state high brilliance sources have appeared on the industrial market. These sources are split between disc laser and fibre laser, with very different structures between them but characterised by having the same active material, the Ytterbium (Yb) ion. The source brilliance is defined by its power per area and solid angle unit of generated beam.

The high brilliance laser systems, due to the high absorbance at the working wavelength, make it possible to cut copper, bronze, brass, aluminium alloys, which instead are non processable with CO₂lasers. These systems use focused beams which can be directed with precision so as to provide perfectly cut edges in carbon steels up to one inch thick. This technology limit is due to the greater roughness of edges in high thickness stainless steels or aluminium alloys subject to fusion cutting.

High brilliance lasers consist of a machine equipped with the source component generating the laser beam which in turn is directed onto the working head, which is an essential component of the laser machine.

Without any doubt CO₂ laser is the laser system type which has been the market leader since its appearance (1979). In 2008 almost all lasers sold belonged to this category. Up to a few years ago this source type allowed an increased output power while still retaining good focusing performances of the emitted beam. These positive features came with some drawbacks, among which are:
- the reduced output requiring an electric power supply ten times the optical output;
- the need to keep a narrow window of temperature in the gas mixture containing the active medium (namely the carbon dioxide molecule) thus requiring the use of a chiller which has a role in the further reduction of the already poor electric performance.
- the impossibility of using a flexible optical fibre to convey the beam from source to working point, needing to employ expensive optical chains with mirrors whose correct alignment is difficult to retain, avoiding a deterioration of the aforementioned generated laser beam performances.

Up to now this was the only technology which could offer a technically valuable solution to the processing of materials such as iron, steel, aluminium and others, with thickness ranging from a millimetre to a few centimetres.

The reason was that the high brilliance laser application fields were restricted to some material types and low thicknesses, then in most processes, above all for work on behalf of a third party, CO₂ lasers have continued to be used even if they were more expensive.

The fibre laser sources offer, in fact, notable advantages like:
- very good focusing performances;
- high electro-optical efficiency;
- the generated beam can be transmitted through a fibre;
- low maintenance needed.

The quality comparison between the two technologies (without using unsaturated hydrocarbons as assistant gas components in high brilliance sources) is set out in the following table:

| | **CO₂** | **High Brilliance** |
|---|---|---|
| Source buying cost | Low | High |
| Independent functioning | Very reliable | Scarcely reliable |
| Energy efficiency | High input | Low input |
| Compact layout | Cumbersome | Compact |
| Simple functioning | Easy | Difficult |
| Low maintenance | Yes | Not |
| Continuous throughput | Good | Very good |
| Good cutting quality | Good | Unsatisfactory |

As can be inferred from the table, as far as maintenance, energy input, productivity and dimensions are concerned, the fibre sources are better than the ones with CO₂ laser.

Coupling fibre sources with mixtures containing unsaturated hydrocarbons, it is then possible to have the listed advantages in processes up to now available only with CO₂ laser.

The results obtained from both fibre source and mixtures with unsaturated hydrocarbons concentrations are thus:
- better productivity and repoducibility
- wide range of shapes processed
- processing on every type of thickness (from 5 mm and higher) and on different types of materials (carbon steels, stainless steels, etc.)
- lower number of processed surface pre-treatments.

Therefore, the previous limits making the use of CO₂ laser the only valid possibility have been exceeded by fibre lasers due to the use of mixtures with unsaturated hydrocarbons concentrations.

### Detailed description of the invention

The invention relates to fibre laser source systems and a head for cladding processes, characterized in that they use unsaturated hydrocarbons as assistant gas selected from acetylene, methylacetylene, ethylacetylene, propylacetylene, particularly acetylene, in the gaseous state.

The unsaturated hydrocarbons are used in mixtures at concentrations between 0.1% and 6% and are fed as pure gases, in their mixture or mixed with other gases.

The systems of the invention preferably comprise a system fluxing the mixture onto the piece already premixed or mixed upstream the fibre laser system or said cladding head or fibre source and reach these components through a single feeding route or different feeding routes.

The unsaturated hydrocarbons can also be fluxed onto the working piece mixed downstream of the laser machine or downstream of the fibre source or downstream of the cladding head and reach these through a single or more feeding routes.

The unsaturated hydrocarbons can be mixed with diluting gases straight at the point of feeding onto the piece, such mixing being either through a device which can or not be integrated in the cladding head or by simple mixing when gases are fluxed onto the working area through one or more feeding routes.

The unsaturated hydrocarbons can be mixed with one or more inert gases such as nitrogen, argon, helium, neon, krypton, xenon or with one or more reducing gases such as hydrogen, methane, propane, or with mixtures of the said inert gases and reducing gases.

The unsaturated hydrocarbons can also be mixed with one or more combustive gases such as oxygen or nitrogen monoxide.

According to a form of embodiment of the invention, the unsaturated hydrocarbons are premixed in a mixing device with inert and/or reducing gases located before or on the cladding head, before or on the fibre laser brilliance source, before or on the laser machine, and reach the working piece through a single or more feeding routes.

According to an alternative form of embodiment of the invention, the said unsaturated hydrocarbons are premixed in a mixing device with inert and/or reducing gases located after the cladding head, after the high brilliance source, after the laser machine, and reach the working piece through a single one or more feeding routes.

The unsaturated hydrocarbons and the inert and/or reducing gases are fluxed onto the piece through feeding devices for powders, alloys and/or other additional substances to the process.

A typical invention system includes one or more of the following components:
- storage of compressed gas in cylinders, cylinders packs, multi-unit cylinder trailers;
- storage of compressed gases in mobile or fixed cryogenic containers;
- self-production plants on site;
- compressed gas pressure reduction from 0,1 to 4000000 Pa (40 bar);
- supplied gas flow setting at values of 0.5-100 m³/h;
- safety devices for pressures, flow rates and concentrations of mixture near the processing area in order to prevent the danger of explosivity and flammability.

The invention relies on the physico-chemical properties of acetylene or other unsaturated gases releasing energy upon dissociation.

Mixing acetylene, or other unsaturated hydrocarbons with other gaseous components, such as nitrogen, allows for the exploitation of the high rate of dissociation of these molecules and their ability of quickly releasing energy at the high brilliance lasers working flows, pressures and temperatures. Mixing hydrocarbons in inert gases further allows avoiding the danger related to their flammability and explosivity.

The use of mixtures at acetylene concentrations between 0.1% and 6%, improves the performances of machines used for cladding. This allows for the widening of new application fields and, above all, removes some of the present limits.

The aforementioned unsaturated hydrocarbons, and particularly acetylene, can be mixed with:
- inert gases (nitrogen, argon, helium, neon, argon, krypton, xenon) in order to work with mixtures classified as inert and to increase the working pressure;
- reducing gases (hydrogen, methane, propane and hydrocarbons), in order to combine processes releasing energy with reduction processes induced by the reducing gas.
- combustive gases such as oxygen or nitrogen monoxide.

Mixtures used in cladding equipment can consist of one or more unsaturated hydrocarbons.

The mixtures are fed, with different modes, on the high brilliance sources, on the machine equipped with such source, or on the working piece.

As an example, the use modes of the most common mixtures are set out:
- use of premixed gas with a low acetylene or unsaturated hydrocarbons content, through a unique feeding route to the machine, source or directly onto the working piece;
- supplying diluting gas, e.g. nitrogen, and acetylene, or unsaturated hydrocarbons, through different feeding lines merging in a gas mixer; this can be located (a) upstream of the machine or the high brilliance source or on the cladding head, (b) be installed on the machine or high brilliance source or cladding head and provides for their mixing. This mixed gas can be supplied onto the working piece through one or more feeding routes.
- supplying of diluting gas, e.g. nitrogen, and acetylene, or unsaturated hydrocarbons, through different feeding lines directly arriving (a) upstream of the machine or high brilliance source or on the cladding head, (b) onto the machine or high brilliance source or the cladding head. The gases conveyed in this way can be mixed in a special external device located downstream of the machine, laser cladding head or at the moment of feeding onto the piece.

The system consists of the following components.
- Storage: the storage can be any one of those presently known: cylinders and cylinders packs for acetylene; cylinders, cylinders packs and fixed or mobile cryogenic containers for the gas or gases used as diluents.

Multi-unit cylinder trailers can also be used both for acetylene and diluting gases. Said storage can also be used for a ready-to-use mixture.
- Pressure reduction step: pressure regulation is always necessary, pressure required by the process varies, for cladding, from about 0,5 bar to about 7 bar. The pressure reduction can be performed with devices already available on the market.
- Flow rate measuring system: usable flow rates vary widely depending on the application. Special devices for the flow regulation are already available on the market.
- Safety devices: the unsaturated hydrocarbons are inflammable gases, in order to avoid explosivity and flammability hazards it is necessary to provide appropriate safety proceedings, including sensors and blockage systems in the case of gas leaks.

The systems and equipment described can be repeated a number of times as necessary, based on the size of the process, plant and sources.

The benefits achieved and expected for each individual application are set out below outlining the fibre laser sources' advantages in comparison to the CO₂ laser.

Fibre lasers consist of a machine equipped with the source component generating the laser beam and which in turn is directed onto the working head which is an essential component of the laser machine.

### Cladding tests

Tests on cladding have been conducted.

The laser cladding with acetylene activity referred to two different types of deposit layering, the first made with a fibre laser source and powder with a high content of carbides, the second using a diodes source and stellite 21 powder. We found that the gas examined plays a double role, in fact if in the first case it contributed to the porosity elimination, in the second it considerably increased the deposit layering; both these effects (at least in laser cladding) can be attributed to the same explanation.

The tests' description given below is organized in 4 parts, in the first the gas role in the process will be explained, in the second part the materials and powders used, in the third part an explanation for the supply of acetylene onto the process will be suggested and, lastly, some significant experiments will be shown.

The gas configuration inside a laser cladding head is more complex compared to a welding cutting or cutting, because the powder, carried by a gas to the working area, also plays a role. The powder is an essential element of the process, because it supplies material for the deposit layer, but at the same time is also a hindrance element. In fact if deposited on the optical system (both protecting glasses and lenses) it shortly causes them to break (obviously acting in combination with the laser).

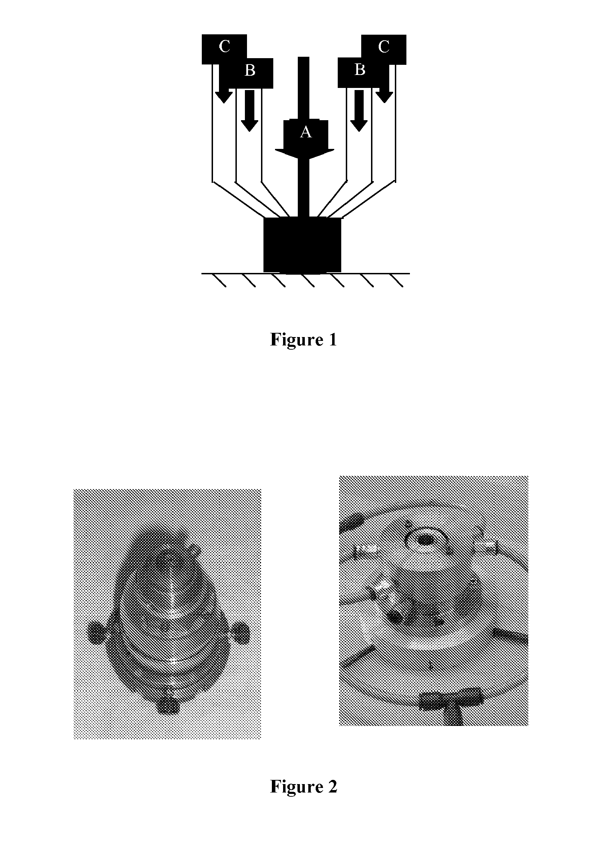

Inside a laser cladding head it is then necessary to have three types of gas (figure 1). The first is required for lens protection (A - Gas protecting the lenses). This gas is directly blown onto the working area and is nearly always a hindrance element for the process as it blends the molten metal. For this reason very low working pressures are used (about 1 bar), just enough to avoid the powder entering the nozzle. When acetylene is used as a lens protecting gas, besides stopping the rising of powder in the nozzle, it also plays an essential role in the molten well of the base metal to be cladded.

The second gas is related to the supply of the powder (B - Powder vector gas), the head channels supplying the powder and gases are created to focus the powder in a single point, in order to be aligned with the laser beam. However this creates a gas mixture in the molten well, from which the deposit layer will grow. The last gas (C - Coating gas) is necessary to protect the process and insulate it from the surrounding atmosphere, if well calibrated, cladding shouldn't "feel" this gas, whose only purpose is protection.

The powders and gases injection heads used are shown in figure 2; note that the "fibre" head has an round exit hole and is devoid of coating gas, while the "diode" head also has an round exit hole, but on a beam rectangular spot and is supplied with all three gases.

In this application deposit layers are generally made on large volume pieces, wherein a small part of the base metal is brought to melting, to allow for good powder adhesion. This latter melts completely and settles thereby increasing the deposit layer.

Two types of powders have been used:
1. WC-CO/92-8
2. Stellite 21 (Cr-Mo-Ni-C-Co/27-5-3-0.3-base)

Both have granule dimensions ranging from 15 to 150 µm. This value is very important as such small particles are employed in no other laser application. The small dimensions lead to a very low thermal inertia compared to the base metal, regardless of its composition.

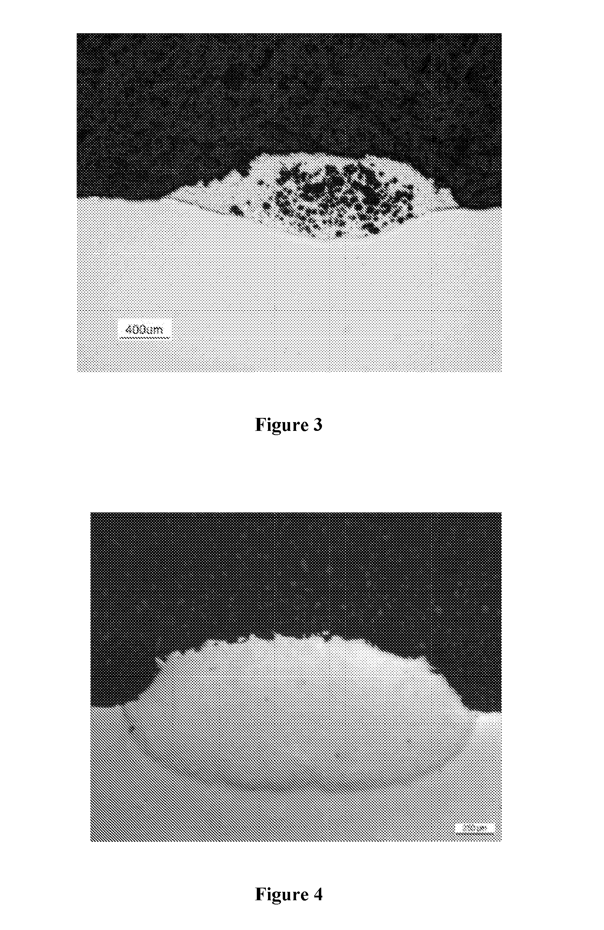

The powder with carbides only, namely the first of the two mentioned above, is much more difficult to clad compared to the second and produces a widespread porosity inside the deposited layer, as can be seen in figure 3.

The second powder on the contrary doesn't produce porosity problems (figure 4).

As sources high brilliance lasers have been used. Similar results are difficult to reproduce with a CO₂ laser and, in this case, they would also be more expensive.

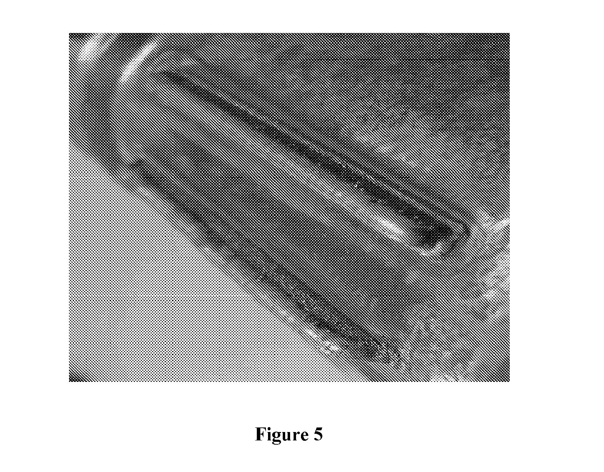

The function of acetylene or an unsaturated hydrocarbon, used as gas (been them A and/or B and/or C), is essential. There is still no explanation for why the chemical/physical phenomena which, through the use of acetylene or an unsaturated hydrocarbon, give a better deposit layer quality and quantity (figure 5), a bigger productivity in terms of speed, a better yield of the powders used and a better quantity of deposit layer per time unit.

It is however known that acetylene, once triggered, generates an exothermic reaction releasing heat at the process site. In cladding this heat release is very noticeable.

## Claims

1. Fibre laser source system and head for cladding processes, **characterized in that** they use unsaturated hydrocarbons selected from acetylene, methylacetylene, ethylacetylene, propylacetylene, particularly acetylene, in the gaseous state as assistant gas.

2. System according to claim 1, wherein unsaturated hydrocarbons are used in mixtures at concentrations between 0.1% and 6%.

3. System according to claim 1 or 2, wherein said unsaturated hydrocarbons are fed as pure gases, as a mixture of such or mixed with other gases.

4. System according to any one of claims from 1 to 3, wherein a system is provided for fluxing the mixture already premixed onto the piece or mixed upstream of the fibre laser system or said cladding head or fibre source and reaches these components through a single feeding line or different feeding lines.

5. System according to any one of claims from 1 to 3, wherein said unsaturated hydrocarbons are fluxed onto the working piece mixed downstream of the laser machine or downstream of the fibre source or downstream of the cladding head and reach these through a single one or more feeding lines.

6. System according to any one of claims from 1 to 3, wherein said unsaturated hydrocarbons are mixed with diluting gases directly at the moment of conveying onto the piece, such mixing being either through a device which can be integrated or not in the cladding head or through simple mixing which happens when the gases are fluxed onto the working area through a single or more feeding routes.

7. System according to claim 2, wherein said unsaturated hydrocarbons are mixed with one or more inert gases.

8. System according to claim 2, wherein said unsaturated hydrocarbons are mixed with one or more reducing gases.

9. System according to claim 2, wherein said unsaturated hydrocarbons are mixed with one or more inert gases and one or more reducing gases.

10. System according to claim 2, wherein said unsaturated hydrocarbons are suitably mixed with one or more combustive gases.

11. System according to any one of claims from 7 to 9, wherein said unsaturated hydrocarbons are premixed in a mixing device with inert and/or reducing gases located before or on the cladding head, before or on the fibre laser brilliance source, before or on the laser machine, and reach the working piece through one or more feeding routes.

12. System according to any one of claims from 7 to 9, wherein said unsaturated hydrocarbons are premixed with inert and/or reducing gases in a mixing device located after the cladding head, after the high brilliance source, after the laser machine, and reach the working piece through one or more feeding routes.

13. System according to any one of claims from 7 to 11, wherein said unsaturated hydrocarbons and the inert and/or reducing gases are fluxed onto the piece through feeding devices of powders, alloys and/or other substances that can be added to the process.

14. System according to any one of the preceding claims, comprising one or more of the following components:
- storage of compressed gas in cylinders, cylinder packs, multi-unit cylinder trailers;
- storage of compressed gases in mobile or fixed cryogenic containers;
- self-production plants on site;
- compressed gas pressure reduction from 0,1 to 4000000 Pa (40 bar);
- supplied gas flow setting at values of 0.5-100 m³/h;
- safety devices for pressures, flow rates and concentrations of mixture near the processing areas in order to prevent the danger of explosivity and flammability.

15. Use of unsaturated hydrocarbons, such as acetylene, methylacetylene, ethylacetylene, propylacetylene, and particularly acetylene, in the gaseous state as assistant gas in laser systems with fibre laser sources for cladding processes.
